# EUROPEAN PATENT APPLICATION

(11) **EP 4 390 798 A1**
(43) Date of publication of application: **26.06.2024**
(21) Application number: 23201192.4
(22) Date of filing: 02.10.2023
(51) Int. Cl.: G06Q 10/0631, G06Q 10/0633, G06Q 10/0639, G06Q 50/26

(54) **FLOW CONTROL METHOD, FLOW CONTROL PROGRAM, AND INFORMATION PROCESSING DEVICE**

(30) Priority: 20.12.2022 JP 2022203749
(71) Applicant: FUJITSU LIMITED, Kawasaki-shi, Kanagawa 211-8588 (JP)
(72) Inventor: Hotta, Shinji, Kawasaki-shi, Kanagawa, 211-8588 (JP); Kuraki, Kensuke, Kawasaki-shi, Kanagawa, 211-8588 (JP); Sawasaki, Naoyuki, Kawasaki-shi, Kanagawa, 211-8588 (JP); Inomata, Akihiro, Kawasaki-shi, Kanagawa, 211-8588 (JP)
(74) Representative: Hoffmann Eitle

(57) **Abstract**

A flow control method executed by a computer, includes: extracting, from a plurality of subjects, one or more first subjects each satisfying a first condition, the one or more first subjects being extracted based on a result of assignment of the plurality of subjects to a node based on a workflow that includes the node connected to a conditional branch by a directed edge; determining an insertion point of a new conditional branch in the workflow, based on distribution of the one or more extracted first subjects in the workflow; inserting a second condition, as the new conditional branch, at the insertion point, the second condition separating, at a lower node that is lower than the determined insertion point, the one or more first subjects from a subject not satisfying the first condition among the plurality of subjects; and inserting a new node at a branch destination of the new conditional branch.

## Description

### FIELD OF THE INVENTION

The embodiments discussed herein are related to a flow control method, a flow control program, and an information processing device.

### BACKGROUND OF THE INVENTION

Measures may be planned to achieve an objective. For example, in a municipality, there are measures to follow up on residents at risk of kidney disease to reduce the prevalence of chronic kidney disease. A measure, for example, is represented in the form of a workflow that includes conditional branches and nodes.

One prior art involves analyzing contents of a start node, extracting characteristics of the start node, analyzing contents of secondary nodes linked to the start node, extracting characteristics of the secondary nodes, comparing the characteristics of the start node and the characteristics of the secondary nodes to determine the similarity of the secondary nodes to the start node, and combining the secondary nodes determined to be similar and the start node. For example, refer to Japanese Laid-Open Patent Publication No. H11-3347.

### SUMMARY OF THE INVENTION

It is an object in one aspect of the embodiments to at least solve the above problems in the conventional technologies.

According to an aspect of an embodiment, a flow control method executed by a computer, includes: extracting, from a plurality of subjects, one or more first subjects each satisfying a first condition, the one or more first subjects being extracted based on a result of assignment of the plurality of subjects to a node based on a workflow that includes the node connected to a conditional branch by a directed edge; determining an insertion point of a new conditional branch in the workflow, based on distribution of the one or more extracted first subjects in the workflow; inserting a second condition, as the new conditional branch, at the insertion point, the second condition separating, at a lower node that is lower than the determined insertion point, the one or more first subjects from a subject not satisfying the first condition among the plurality of subjects; and inserting a new node at a branch destination of the new conditional branch.

### BRIEF DESCRIPTION OF DRAWINGS

Fig. 1 is a diagram depicting one example of a flow control method according to an embodiment.
Fig. 2 is a diagram depicting one example of a system configuration of an information processing system 200.
Fig. 3 is a block diagram depicting one example of a hardware configuration of a flow controller device 201.
Fig. 4 is a diagram depicting one example of contents stored by a characteristics amount table 220.
Fig. 5 is a block diagram depicting one example of a functional configuration of the flow controller device 201.
Fig. 6A is a diagram depicting one example of a distribution of predicted dropouts.
Fig. 6B is a diagram depicting one example of distribution of predicted dropouts.
Fig. 7A is a diagram depicting one example of determining an insertion point of a new conditional branch.
Fig. 7B is a diagram depicting one example of determining an insertion point of a new conditional branch.
Fig. 8A is a diagram depicting one example of insertion of a new conditional branch.
Fig. 8B is a diagram depicting one example of insertion of a new conditional branch.
Fig. 9 is a diagram depicting one example of determining a second condition for a new conditional branch.
Fig. 10 is a diagram depicting one example of guidance of predicted dropouts.
Fig. 11 is a diagram depicting one example of determining a new node.
Fig. 12 is a diagram depicting one example of determining a new node.
Fig. 13A is a diagram depicting a first example of operation when a new measure flow is generated.
Fig. 13B is a diagram depicting a first example of operation when a new measure flow is generated.
Fig. 14 is a diagram depicting a second example of operation when a measure flow is generated.
Fig. 15 is a diagram depicting one example of operation in a case in which the measure flow includes nodes of multiple stages.
Fig. 16 is a flowchart depicting one example of a procedure of a flow control process of the flow controller device 201.

### DESCRIPTION OF THE INVENTION

First, problems associated with the conventional techniques are discussed. With the conventional techniques, a workflow that represents a measure to achieve an objective is difficult to generate with consideration of viewpoints of both the side implementing the measure and the side receiving the measure.

Embodiments of a flow control method, a flow control program, and an information processing device of the present invention are explained with reference to the accompanying drawings.

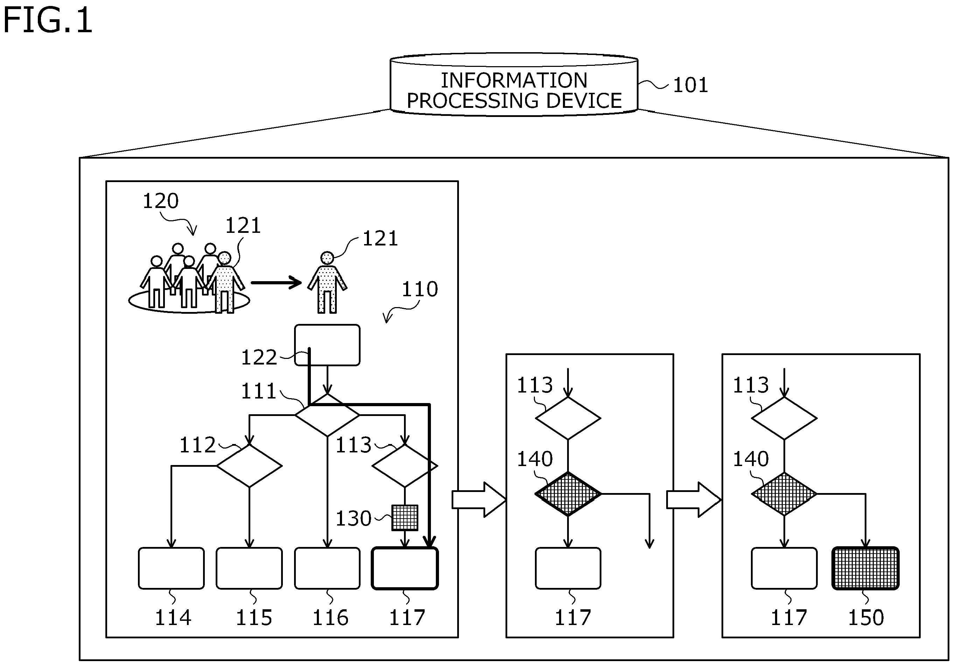

Fig. 1 is a diagram depicting one example of the flow control method according to an embodiment. In Fig. 1, an information processing device 101 is a computer configured to aid measure planning. A measure is an action to be taken with respect to a subject (object) to achieve an objective. A subject, for example, is an individual, an organization, etc. The measure is represented by a workflow that includes a node connected to conditional branches by directed edges.

A node, for example, represents an intervention for achieving an objective. An intervention, for example, is a service, a plan, a treatment, a proposal, etc. For example, in an instance of a measure for an objective to reduce the incidence of chronic kidney disease among residents of a municipality, the intervention, for example, is "Treatment by a nephrologist", "Health guidance by a primary care physician", "Treatment by a diabetologist", etc.

Conventionally, in the field, in the planning of measures, proposals for measures are often created based on the intuition, experience, and assumptions of planners, making it difficult to achieve the objective, which is a measure indicator. A measure indicator, for example, is a key performance indicator (KPI). Therefore, at the measure planning stage, it is desirable to plan measures from the perspectives of both the measure implementing side and the measure receiving side, based on evidence-based KPI predictions.

Here, a workflow 110 is one example of a workflow representing a measure. The workflow 110 includes conditional branches 111, 112, and 113 and nodes 114, 115, 116, and 117. The nodes 114 to 117 are connected to the conditional branches 111 to 113 by directed edges. The conditional branches (for example, the conditional branch 111 and the conditional branch 112) may be connected to one another by directed edges and the intervention nodes may be connected to one another by directed edges.

The workflow 110, for example, represents a measure to achieve an objective of reducing the prevalence of chronic kidney disease. Each of the nodes 114 to 117 represents an intervention for achieving the objective. Multiple subjects 120 are individuals and constitute a subject of the measure. For each subject among the multiple subjects 120, the intervention that is to be implemented, for example, is determined depending on the node to which the subject is assigned by sequentially following the conditional branches from the uppermost level of the workflow 110 according to characteristics such as attributes of the subjects. For example, a subject 121 is assigned to the node 117, along an arrow 122. The node 117, for example, represents an intervention (follow-up) such as "Treatment by a nephrologist".

Here, technology is available that aids the decision-making of the measure planner by predicting for each measure candidate, the KPI of the measure by using integrated data that includes various types of data (Prior art 1). For example, the objective of a measure is assumed to be "Reduce incidence of obesity in adults of the subject region to 25%", the measure candidate is assumed to be "Internists provide guidance on exercise and nutrition to youth among residents in the region", and the KPI is assumed to be "Incidence of obesity in adults of the region".

In this instance, according to Prior art 1, it is conceivable that when the measure candidate is executed, for each individual of the subject region, the probability of the individual becoming obese within three years is estimated to aid the measure planner in the decision-making process. The integrated data used in making the prediction is, for example, daily health information, history of diagnosis results, history of lifestyle habits, history of test results, etc. of each individual of the subject region.

Nonetheless, with Prior art 1, the measure is designed from the perspective of the planner and thus, the intervention assigned by the measure is not always suitable for each individual. Therefore, in reality, there are many cases in which the subject does not respond and thus, does not receive an intervention, resulting in a discrepancy between the schedule and the actual results and thus, the objective of the measure may not be satisfied.

In the description below, a case in which an intervention is not received may be referred to as "dropout". For example, the intervention represented by the node 117 may not be suitable for the subject 121 and a case (dropout) in which the subject 121 does not respond and thus, does not receive the intervention may occur. When a case like this occurs, a discrepancy between the schedule and the actual results occurs and the measure fails to achieve the objective.

On the other hand, technology is available that predicts, from various data of an individual, whether the individual will receive (accept) an assigned intervention (Prior art 2). The data is, for example, information such as personal attributes, medical examination history, outpatient appointment history, prescription drug history, medical test history of the individual, etc. Nonetheless, with Prior art 2, even when dropout is predicted for the intervention, it is impossible to determine how to change the workflow with consideration of the predicted dropout.

Regarding Prior art 2, for example, refer to, "Hisashi Kurasawa, PhD1,2, Katsuyoshi Hayashi, PhD1,2, Akinori Fujino, PhD2, Koichi Takasugi, PhD1,2, Tsuneyuki Haga, ME2, Kayo Waki, MD, MPH, PhD1, Takashi Noguchi, MD, PhD1, and Kazuhiko Ohe, MD, PhD1, "Machine-Learning-Based Prediction of a Missed Scheduled Clinical Appointment", Journal of Diabetes Science and Technology 2016, Vol. 10 (3) 730-736".

Thus, in the present embodiment, a flow control method is described that aids measure planning work to enhance the efficiency of generating a workflow that represents a measure. Here, an example of processing (corresponds to processes (1) to (4) below) of the information processing device 101 is described.
(1) The information processing device 101 extracts, from among multiple subjects, a first subject that satisfies a first condition; the information processing device 101 extracts the first subject based on a result of assignment of the multiple subjects to nodes based on a workflow that includes the nodes, which are connected to conditional branches by directed edges. Here, the workflow is, for example, information in the form of a graph representing a measure for achieving an objective. The nodes, for example, represent interventions for achieving the objective. At the initial stage, the workflow is created, for example, from the perspective of the implementing side (planner) of the measure.

Each of the subjects is assigned to the nodes based on, for example, various types of characteristics amounts of the subject. The characteristics amounts of each of the subjects represents, for example, attributes such as the gender and age of the subject as well as medical examination history, outpatient appointment history, prescription drug history, medical test history, etc. of the subject. The first condition may be arbitrarily set.

For example, a condition for identifying a subject for whom the effect of the intervention represented by the node to which the subject is assigned may low is set as the first condition. For example, the first condition may be a condition that the predicted probability (dropout probability) that the subject will not receive (accept) the intervention represented by the node to which the subject is assigned is at least equal to a threshold. The predicted probability that the intervention will not be received may be obtained from the various types of characteristics amounts of the subject, using an existing technique (for example, Prior art 2).

In the example depicted in Fig. 1, the first condition is assumed to be a condition "the predicted probability that the intervention represented by the node to which the subject is assigned will not be received is at least equal to a threshold". Further, for the intervention represented by the node 117 to which the subject 121 is assigned, the predicted probability that the subject 121 will not receive the intervention is assumed to be "90%". Further, the threshold is assumed to be "70%". In this case, the subject 121 is extracted as a first subject.

(2) The information processing device 101 determines an insertion point of a new conditional branch in the workflow, based on the distribution state of extracted first subjects in the workflow. The conditional branch, for example, is inserted in the workflow to guide the first subjects to a different node (another node different from the node to which the first subjects were assigned).

In particular, for example, the information processing device 101 determines the insertion point of the new conditional branch to be a point higher in the workflow than that of the node to which the first subjects were assigned. More specifically, for example, the information processing device 101 determines the insertion point of the new conditional branch in the workflow to be the lowest point that encompasses the node to which the first subjects were assigned.

In the example depicted in Fig. 1, a case is assumed in which the insertion point of the new conditional branch is determined to be a point 130, which is the lowest point encompassing the node 117 to which the subject 121 was assigned, in the workflow 110.

(3) The information processing device 101 inserts a second condition, as a new conditional branch, at the determined insertion point so that at a node lower than the determined insertion point, the first subjects are separated from subjects that do not satisfy the first condition. The second condition is determined, for example, based on the characteristics amounts of the subject assigned to the node that is lower than the determined insertion point, among the various types of characteristics amounts of each of the subjects.

In the example depicted in Fig. 1, a case is assumed in which a new conditional branch 140 is inserted at the point 130 in the workflow 110. For example, the subject 121, when being reassigned to a node, is guided to a branch destination different from the node 117 by the new conditional branch 140.

(4) The information processing device 101 inserts a new node at the branch destination of the new conditional branch. Here, the branch destination of the new conditional branch, for example, is a branch destination in a case in which the second condition is satisfied, that is, a guidance destination for the first subjects. Further, the new node, for example, is determined from among multiple types of nodes that are prepared in advance.

In particular, for example, based on the characteristics amounts of the first subjects among the various types of characteristics amounts of the subjects, the information processing device 101 may determine the new node to be a node among the various types of nodes so that the first subjects satisfy a third condition. The third condition may be arbitrarily set and is a condition for identifying a node for which the effect of the intervention may be high for the first subject.

For example, the third condition may be a condition that the predicted probability (dropout probability) that the subject will not receive (accept) the intervention represented by the node to which the subject is assigned is less than a threshold. Further, contents of the intervention represented by the new node, for example, may be determined manually (by the planner) based on the characteristics amounts of the first subjects, after the new node is inserted at the branch destination of the new conditional branch.

In the example depicted in Fig. 1, a case is assumed in which a new node 150 is inserted at the branch destination of the new conditional branch 140, in the workflow 110. The new node 150, for example, is a node where the predicted probability that the subject 121 will not receive (accept) the intervention is less than a threshold.

As described, according to the information processing device 101, a first subject may be extracted for whom the effect of the intervention to which the first subject is assigned based on an existing measure (for example, the workflow 110) may be low such as, for example, the subject 121 who does not respond and thus, does not receive (accept) the intervention. Further, according to the information processing device 101, a new branching point (conditional branch) is created, enabling updating of the flow structure so that a first subject (for example, the subject 121) is guided to the new node.

As described, the information processing device 101 facilitates generation of a workflow that suppresses an occurrence of a case in which a subject (for example, each subject among the multiple subjects 120) does not received (accept) an intervention and enables enhancement of the efficiency of the generation of a workflow that represents a measure for achieving an objective.

In the example depicted in Fig. 1, the information processing device 101, with consideration of the side receiving the measure, may update the flow structure of the workflow 110 that was created from the perspective of the side implementing the measure. In particular, for example, the information processing device 101 enables assignment of a suitable intervention that the subject 121 would receive (accept) by guiding the subject 121 to a different node. As a result, the information processing device 101 may aid the planning of a measure with consideration of the perspectives of both the side implementing the measure and the side receiving the measure.

Further, the contents of the node 117 are updated and thus, it is conceivable that the intervention may be set so that the subject 121 does not dropout. Nonetheless, when a large number of subjects are assigned to a node, it is difficult to set an intervention that is suitable for all the subjects. In this case, the information processing device 101 guides subjects (for example, the subject 121) that may dropout from (skip) the intervention represented by the original node to a different node and thereby separates these subjects from the subjects that will not dropout and thus, may facilitate finding a suitable intervention.

Next, an example of a system configuration of an information processing system 200 that includes the information processing device 101 depicted in Fig. 1 is described. In the description below, as an example, a case is described in which the information processing device 101 depicted in Fig. 1 is applied to a flow controller device 201 in the information processing system 200. The information processing system 200, for example, is applied to a service that aids the work in planning a measure for achieving an objective.

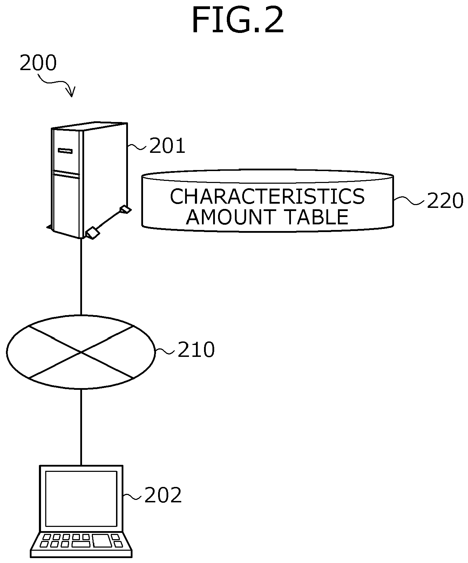

Fig. 2 is a diagram depicting one example of a system configuration of the information processing system 200. In Fig. 2, the information processing system 200 includes the flow controller device 201 and a client device 202. In the information processing system 200, the flow controller device 201 and the client device 202 are connected to each other by a network 210 that may be wired or wireless. The network 210, for example, is the Internet, a local area network (LAN), wide area network (WAN), etc.

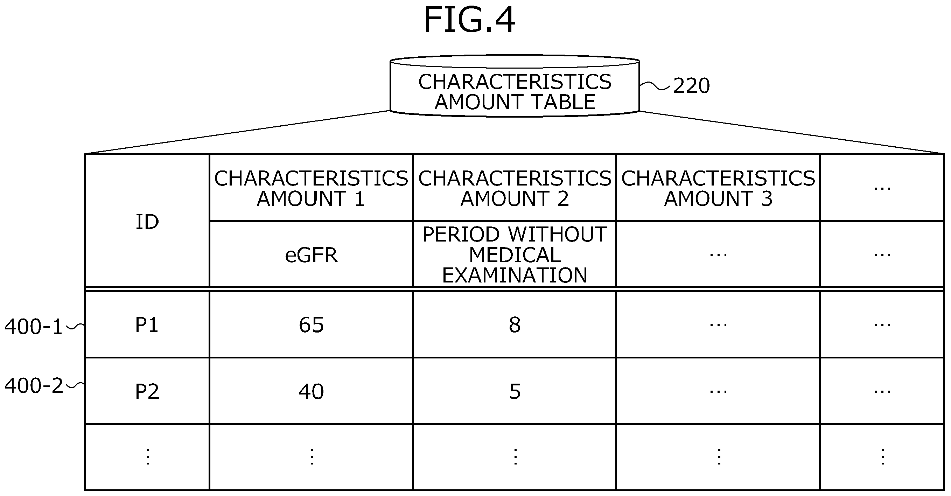

Here, the flow controller device 201 has a characteristics amount table 220 and is a computer configured to aid the planning of a measure. The flow controller device 201, for example, is a server. Contents stored by the characteristics amount table 220 are described hereinafter with reference to Fig. 4.

The client device 202 is a computer used by a user. The user, for example, is the planner of a measure. The client device 202, for example, is a personal computer (PC), a tablet terminal, etc.

Here, while a case in which the flow controller device 201 and the client device 202 are provided separately is described as an example, configuration is not limited hereto. For example, the flow controller device 201 may be implemented by the client device 202. Further, the information processing system 200 may include the client device 202 in plural.

Next, an example of a hardware configuration of the flow controller device 201 is described.

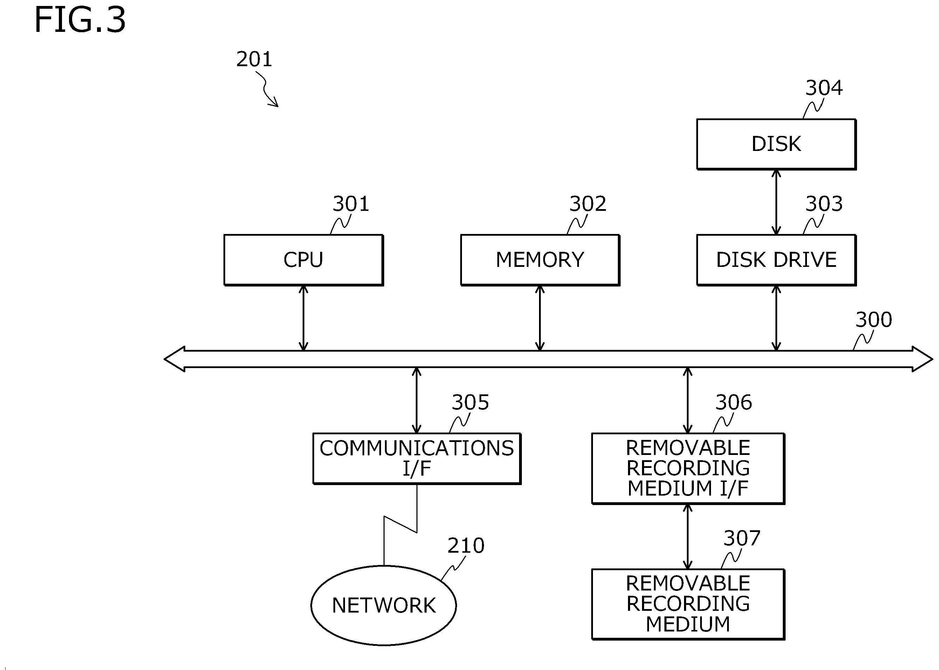

Fig. 3 is a block diagram depicting one example of the hardware configuration of the flow controller device 201. In Fig. 3, the flow controller device 201 has a central processing unit (CPU) 301, a memory 302, a disk drive 303, a disk 304, a communications interface (I/F) 305, a removable recording medium I/F 306, and a removable recording medium 307. Further, these components are connected to one another by a bus 300.

Here, the CPU 301 governs overall control of the flow controller device 201. The CPU 301 may have multiple cores. The memory 302, for example, includes a read-only memory (ROM), a random-access memory (RAM), and a flash ROM, etc. In particular, for example, the flash ROM stores therein a program for the OS; the ROM stores therein an application program; and the RAM is used as a work area of the CPU 301. Programs stored by the memory 302 are loaded onto the CPU 301, whereby encoded processes are executed by the CPU 301.

The disk drive 303, under the control of the CPU 301, controls the reading and writing of data with respect to the disk 304. The disk 304 stores data written thereto under the control of the disk drive 303. The disk 304, for example, is a magnetic disk, an optical disk, etc.

The communications I/F 305 is connected to the network 210 through a communications line and is connected to an external computer (for example, the client device 202 depicted in Fig. 2) through the network 210. Further, the communications I/F 305 administers an internal interface between the flow controller device 201 and the network 210 and controls the input and output of data from the external computer. The communications I/F 305, for example, may be a modem, a LAN adapter, etc.

The removable recording medium I/F 306, under the control of the CPU 301, controls the reading and writing of data with respect to the removable recording medium 307. The removable recording medium 307 stores data written thereto under the control of the removable recording medium I/F 306. The removable recording medium 307, for example, is a compact disc (CD)-ROM, a Digital Versatile Disk (DVD), a universal serial bus (USB) memory, etc.

The flow controller device 201, in addition to the components described above, for example, may further have an input device, a display, etc. Further, of the components described above, the flow controller device 201, for example, may omit the removable recording medium I/F 306 and the removable recording medium 307. Further, the client device 202 depicted in Fig. 2 may also be implemented by a hardware configuration similar to that of the flow controller device 201. However, in addition to the components described above, the client device 202, for example, has the input device, the display, etc.

Next, the contents stored by the characteristics amount table 220 of the flow controller device 201 are described with reference to Fig. 4. The characteristics amount table 220, for example, is implemented by a storage device such the memory 302, the disk 304, etc.

Fig. 4 is a diagram depicting one example of the contents stored by the characteristics amount table 220. In Fig. 4, the characteristics amount table 220 has fields for IDs and various types of characteristics amounts (characteristics amount 1, characteristics amount 2, characteristics amount 3, ...) and information is set into the fields, whereby characteristics amount information (for example, characteristics amount information 400-1, 400-2) is stored as records.

Here, an ID is an identifier that uniquely identifies an individual that is a subject of the measure. The various types of characteristics amounts are information representing characteristics of the individual identified by the ID. For example, the characteristics amount 1 indicates "eGFR". "eGFR" is an abbreviation of estimated glomerular filtration rate, which is an index of renal function.

Further, the characteristics amount 2 indicates "period without medical examination (unit: months)". The characteristics amounts, for example, may include gender, age, health information, diagnostic results, medical test results, lifestyle habits, medical examination history, prescription drug history, etc. of individuals. The characteristics amounts, for example, are extracted from attribute information, health information histories, diagnostic result histories, lifestyle habit histories, medical test result histories, etc. of the individuals that are the subjects of the measure.

For example, the characteristics amount information 400-1 indicates the characteristics amount 1 "65", the characteristics amount 2 "8", the characteristics amount 3 "...", etc. for an individual P1.

Next, an example of a functional configuration of the flow controller device 201 is described.

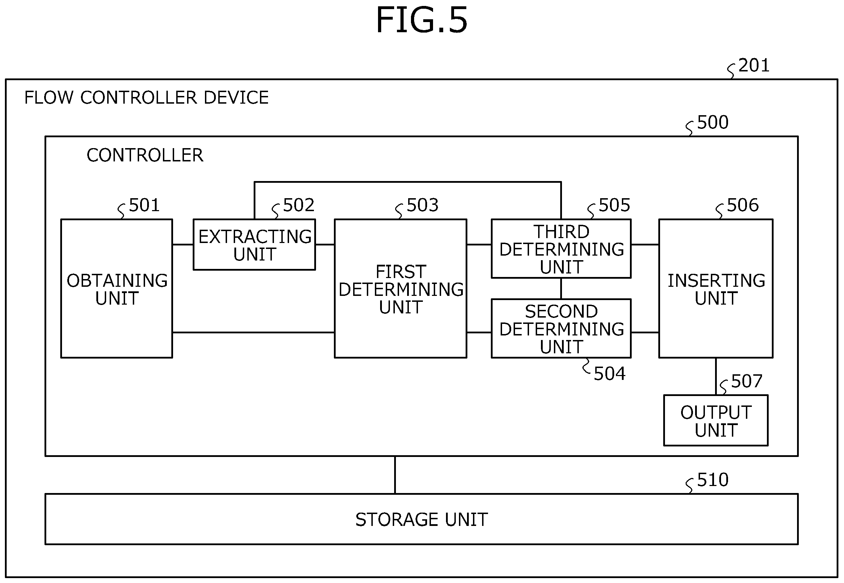

Fig. 5 is a block diagram depicting one example of a functional configuration of the flow controller device 201. In Fig. 5, the flow controller device 201 includes an obtaining unit 501, an extracting unit 502, a first determining unit 503, a second determining unit 504, a third determining unit 505, an inserting unit 506, an output unit 507, and a storage unit 510. The obtaining unit 501 to the output unit 507 are functions constituting a controller 500, in particular, for example, a program stored by a storage device, such as the memory 302, the disk 304, the removable recording medium 307, etc. depicted in Fig. 3, is executed by the CPU 301 or by the communications I/F 305, whereby the functions are implemented. Processing results obtained by the functional units, for example, are stored to a storage device such as the memory 302, the disk 304, etc. Further, the storage unit 510 is implemented by a storage device such as the memory 302, the disk 304, etc. In particular, for example, the storage unit 510 stores therein the characteristics amount table 220 depicted in Fig. 4.

The obtaining unit 501 obtains a workflow that includes nodes connected to conditional branches by directed edges. Further, the obtaining unit 501 obtains results of assigning multiple subjects to the nodes based on the workflow. Here, the workflow, for example, represents a measure for achieving an objective. A node, for example, represents an intervention for achieving the objective.

An intervention, for example, is a service, a plan, a treatment, a proposal, etc. implemented for the subjects. A subject, for example, is an individual, organization, etc. subject to the measure. Each of the subjects is assigned to the nodes, for example, based on the various types of characteristics amounts of the subject. The various types of characteristics amounts, for example, are the characteristics amount 1, the characteristics amount 2, the characteristics amount 3, etc. depicted in Fig. 4.

In the description hereinafter, a workflow that represents a measure for achieving an objective may be indicated as "measure flow". Further, a result of assigning the subjects to the nodes based on the measure flow may be indicated as "node assignment result".

The obtained measure flow, for example, is a workflow that represents a measure proposal drafted by a planner.

In particular, for example, the obtaining unit 501 obtains a measure flow and a node assignment result by receiving the measure flow and node assignment result from the client device 202 depicted in Fig. 2. Further, the obtaining unit 501 may obtain the measure flow and node assignment result through an operational input by a user using the non-depicted input device.

Assignment of each of the multiple subjects to the nodes, for example, may be performed at the flow controller device 201. In particular, the flow controller device 201, based on a measure flow (measure represented by the measure flow), refers to the characteristics amount table 220 depicted in Fig. 4 and according to the various types of characteristics amounts of each of the subjects, assigns the subjects to the nodes.

Based on the obtained node assignment result, the extracting unit 502 extracts, from among the subjects, a first subject that satisfies the first condition. The first condition may be set arbitrarily. For example, the first condition is a condition that the dropout probability is at least equal to a threshold α. The dropout probability is a predicted probability that an intervention will not be received (accepted) by a subject. The threshold α, for example, is set to a value of about 80%. The intervention is an intervention represented by the node to which the subject is assigned.

Further, the first condition may be a condition that there is an onset of a specific disease (for example, such as diabetes). Further, the first condition may be a condition that there is a history of emergency transport. Further, the first condition may be a condition that annual medical expenses are at least equal to a threshold. Whether the first condition is satisfied, for example, is determined from the various types of characteristics amounts of each of the subjects.

Here, the first condition is assumed to be a condition "dropout probability is at least equal to the threshold α". "Dropout probability is at least equal to the threshold α" corresponds to dropout from the intervention. In this case, the extracting unit 502 uses an existing technology (for example, Prior art 2) to predict from the various types of characteristics amounts of each of the subjects, the dropout probability for the intervention that is represented by the node to which the subject was assigned and thereby may extract a first subject.

More specifically, for example, the extracting unit 502 learns, for each of the subjects, using logistic regression, a relationship between the various types of characteristics amounts (X) of the subject and dropout (or no dropout) (yi) for each intervention (i). The various types of characteristics amounts (X) of each of the subjects, for example, may be specified from the characteristics amount table 220.

Next, the extracting unit 502 uses a learned model to predict dropout from each of the interventions represented by each of the nodes to which the subjects are assigned. Then, the extracting unit 502 extracts, as a first subject from among the subjects, a subject predicted to dropout from the intervention represented by the node to which the subject was assigned.

The first determining unit 503determines the insertion point of a new conditional branch in the measure flow, based on the distribution of the extracted first subjects in the obtained measure flow. In particular, for example, the first determining unit 503 determines the lowest point (in the measure flow) that encompasses the first subject as the insertion point.

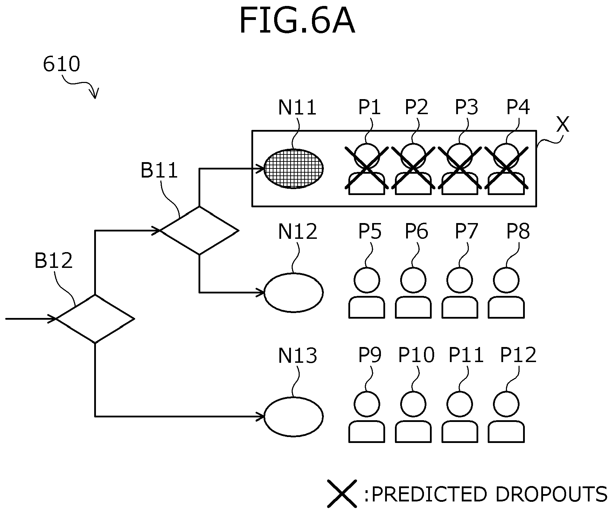

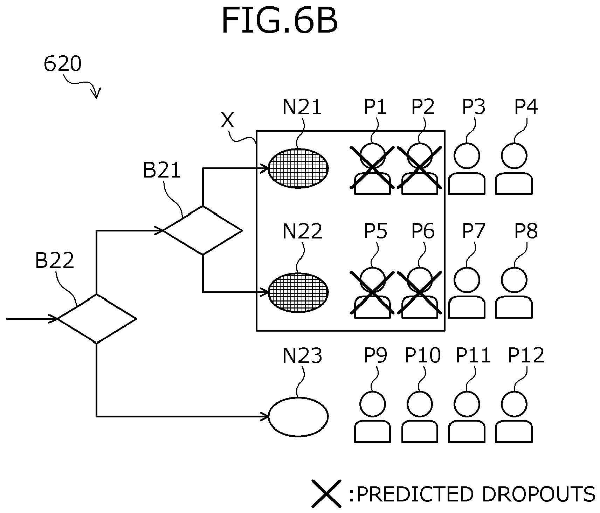

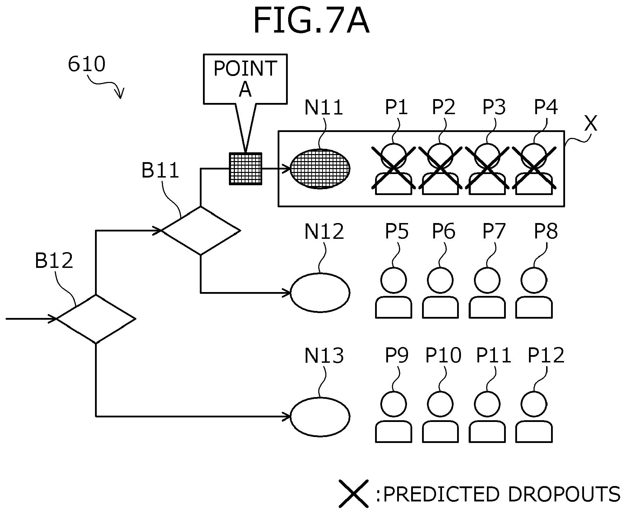

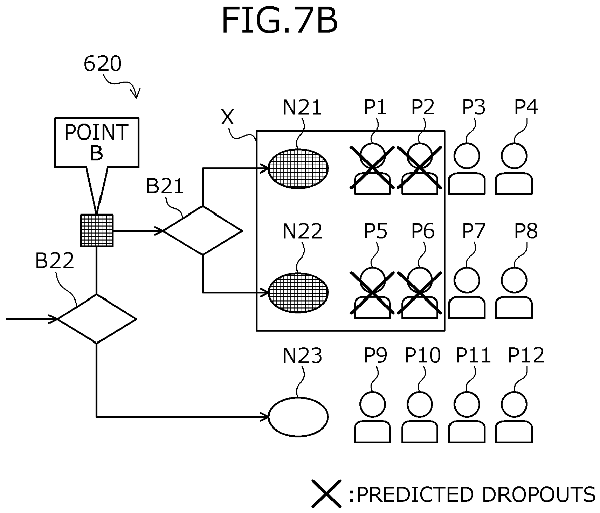

An example of determining the insertion point of the new conditional branch is described hereinafter with reference to Figs. 6A, 6B, 7A, and 7B.

The second determining unit 504 determines the second condition for a node that is lower than the determined insertion point, so as to separate the first subjects and subjects that do not satisfy the first condition. In particular, for example, the second determining unit 504 refers to the storage unit 510, which stores therein the various types of characteristics amounts of each of the subjects, and determines the second condition based on the various types of characteristics amounts of each of the subjects assigned to the node that is lower than the determined insertion point.

More specifically, for example, the second determining unit 504 refers to the characteristics amount table 220 and identifies the various types of characteristics amounts of each of the subjects assigned to the node that is lower than the determined insertion point. Subsequently, the second determining unit 504 determines the second condition by applying a machine learning technique such as a decision tree algorithm, based on the identified various types of characteristics amounts of the subjects.

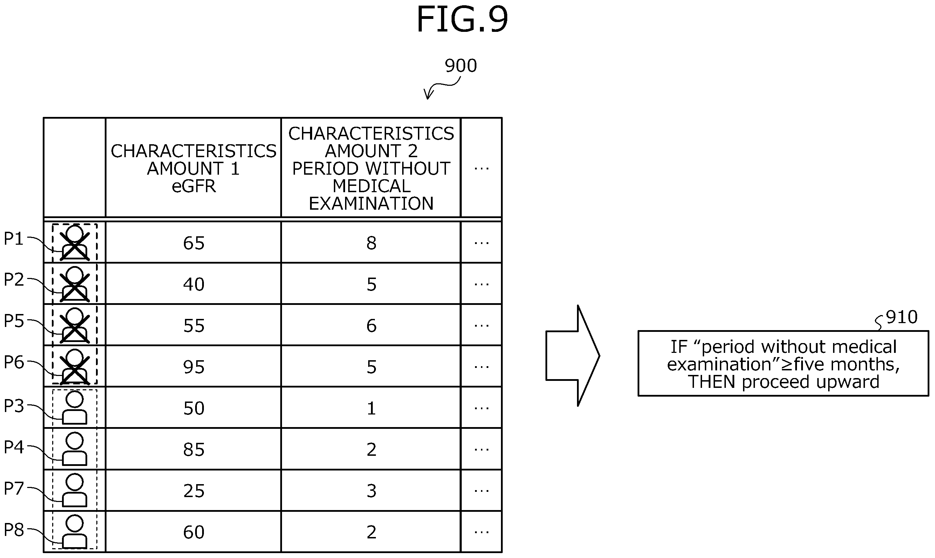

An example of determining the second condition is described hereinafter with reference to Fig. 9. There may be cases in which no condition exists that completely separates the first subjects and subjects that do not satisfy the first condition. In such a case, the second determining unit 504, for example, may guide the first subjects to a different node and determine as the second condition, a condition that separates as much as possible the first subject and the subjects that do not satisfy the first condition.

The inserting unit 506 inserts the determined second condition as a new conditional branch at the determined insertion point. In particular, for example, the inserting unit 506 severs the measure flow at the insertion point. Subsequently, the inserting unit 506 connects the input side of the new conditional branch to the upper side of the severed point and connects the branch destination of a case in which the second condition of the new conditional branch is not satisfied to the lower side of the severed point, whereby the new conditional branch is inserted at the determined insertion point.

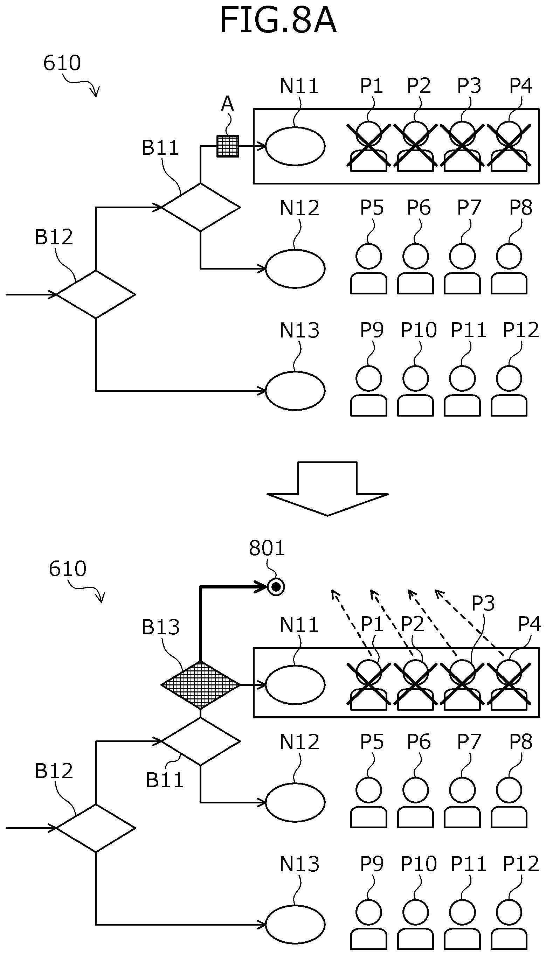

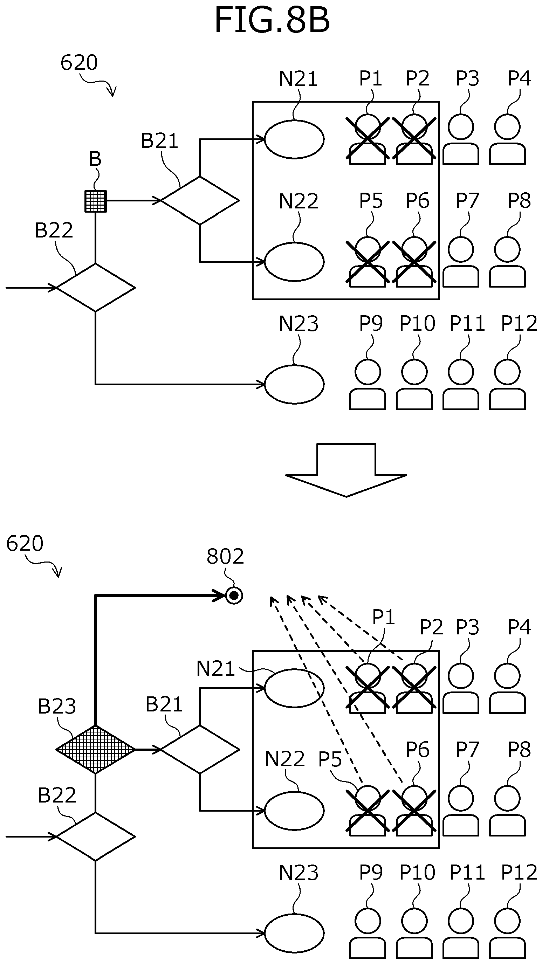

An example of inserting a new conditional branch is described hereinafter with reference to Figs. 8A and 8B.

The third determining unit 505 determines a new node that is to be inserted at the branch destination of the new conditional branch. In particular, for example, the third determining unit 505 refers to the storage unit 510, which stores therein the various types of characteristics amounts of each of the subjects, and from among the multiple types of nodes that are prepared in advance, determines as the new node based on the characteristics amount of the first subjects, a node so that the first subjects satisfy the third condition.

Here, the third condition may be arbitrarily set. As the third condition, for example, a condition for identifying a node for which the effect of the intervention may be high for the first subject may be set. For example, the third condition may be a condition that the dropout probability is less than a threshold β. The threshold β, for example, is set to a value of about 20%. The multiple types of nodes, for example, represent different interventions for achieving the objective.

More specifically, for example, the third determining unit 505 refers to the characteristics amount table 220 and identifies the various types of characteristics amounts of the first subjects. Subsequently, based on the identified various types of characteristics amounts of the first subjects, the third determining unit 505, as the new node, determines from among the multiple types of nodes, a node so that the first subjects satisfy the third condition.

For example, from among the multiple types of nodes, the third determining unit 505 determines, as the new node, a node by which all the extracted first subjects satisfy the third condition. Further, from among the multiple types of nodes, the third determining unit 505 may determine, as the new node, a node for which the percentage of the subjects that satisfy the third condition among the extracted first subjects is highest.

Further, in an instance in which among the multiple types of nodes, not even one node is present where all of the extracted first subjects satisfy the third condition, the third determining unit 505 may specify from among the multiple types of nodes, two or more nodes whereby the extracted first subjects each satisfy the third condition.

More specifically, for example, the third determining unit 505 specifies among the multiple types of nodes, a node A by which a portion of the subjects among the extracted first subjects satisfies the third condition and a node B by which the remaining subjects satisfy the third condition. Further, the third determining unit 505 may determine as a new node, the nodes A and B, which are connected by a conditional branch that guides a portion of the subjects to the node A and guides the remaining subjects to the node B.

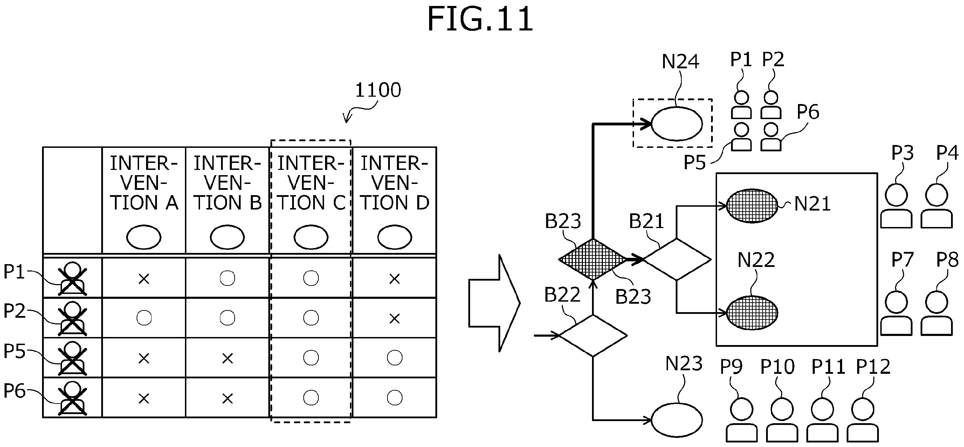

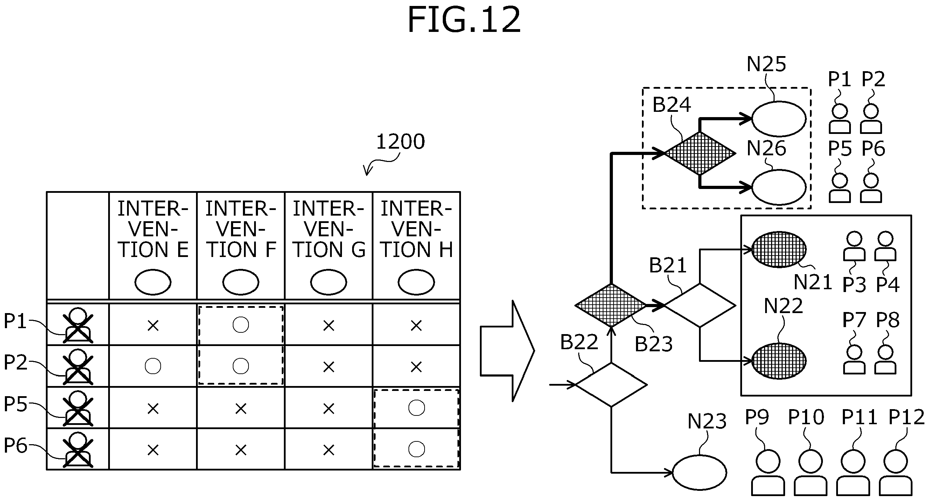

An example of determining a new node is described hereinafter with reference to Figs. 11 and 12.

The multiple types of nodes that are prepared in advance, for example, may be prepared for each node included in the measure flow. For example, the flow controller device 201 may store associated with the nodes included in the measure flow, interventions that are stored in advance, related to the interventions that are represented by the nodes, and different from those interventions represented by the nodes. In this case, the third determining unit 505 may determine a new node from among the multiple types of nodes associated with the node to which the first subjects are assigned.

The inserting unit 506 inserts the new node at the branch destination of the new conditional branch. In particular, the inserting unit 506 inserts the determined new node at the branch destination of the case of the second condition of the new conditional branch being satisfied.

An example of inserting the new node is described hereinafter with reference to Figs. 8A and 8B.

The output unit 507 outputs the measure flow in which the new node has been inserted. The form of output by the output unit 507, for example, is storage to a storage device such as the memory 302, the disk 304, etc.; transmission to another computer by the communications I/F 305; display on a non-depicted display; printout at a non-depicted printer, etc. In particular, for example, the output unit 507 may transmit the measure flow in which the new node has been inserted, to the client device 202.

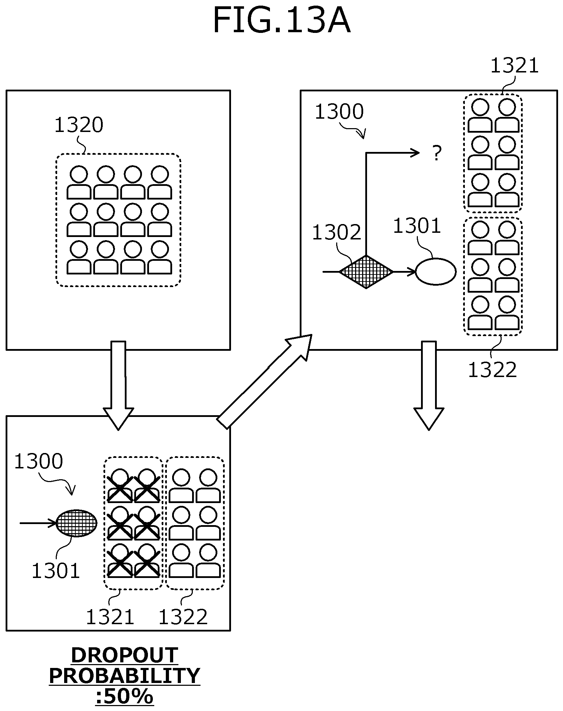

Further, the obtained measure flow may include only a single node connected to a conditional branch by a directed edge (for example, refer to later-described Fig. 13A). A measure flow that includes only a single node corresponds to an unfinished measure flow representing a node that represents a single intervention.

In this case, with respect to the workflow in which the new node has been inserted, the flow controller device 201 may repeatedly execute the processes by the extracting unit 502, the processes by the first determining unit 503, the processes by the second determining unit 504, and the processes by the inserting unit 506 until the percentage of subjects satisfying the first condition among the subjects is at most equal to a threshold γ.

The processes by the extracting unit 502 are processes of extracting the first subjects. The processes by the first determining unit 503 are processes of determining the insertion point of a new conditional branch. The processes by the second determining unit 504 are processes of determining the second condition. The processes by the inserting unit 506 are processes of inserting a new conditional branch and processes of inserting a new node. The threshold γ may be set arbitrarily and, for example, is set to a value of about 20%.

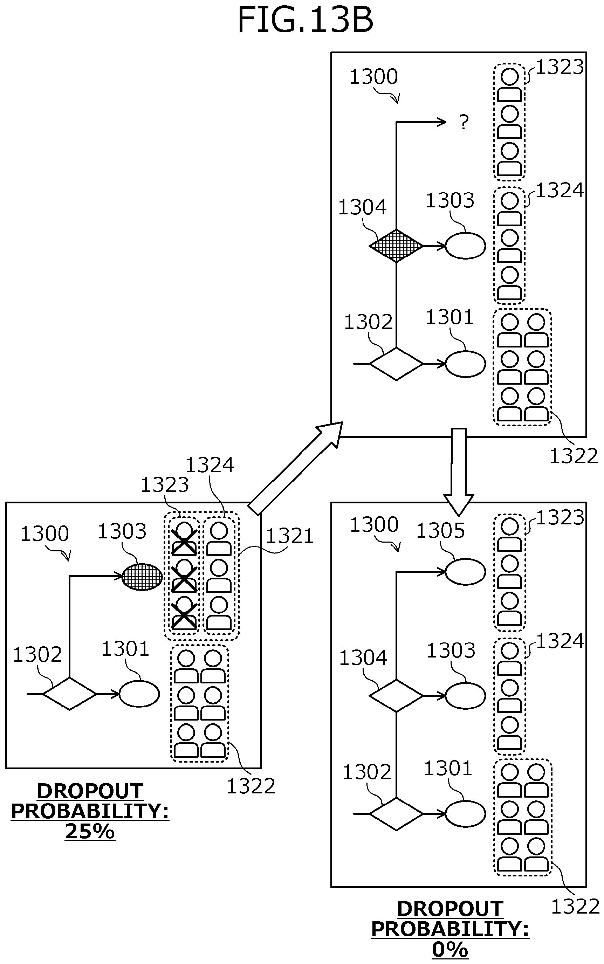

As a result, the flow controller device 201, with a single node as a starting point, may add conditional branches and new nodes while generating a new measure flow. An example of operation when a new measure flow is generated with a single node as the starting point is described hereinafter with reference to Figs. 13A and 13B.

Further, when a new measure flow is generated with a single node as a starting point, for example, the subjects may be a set of subjects that satisfy the first condition as a result of assignment to a node based on another measure flow different from the obtained measure flow (that includes only a single node).

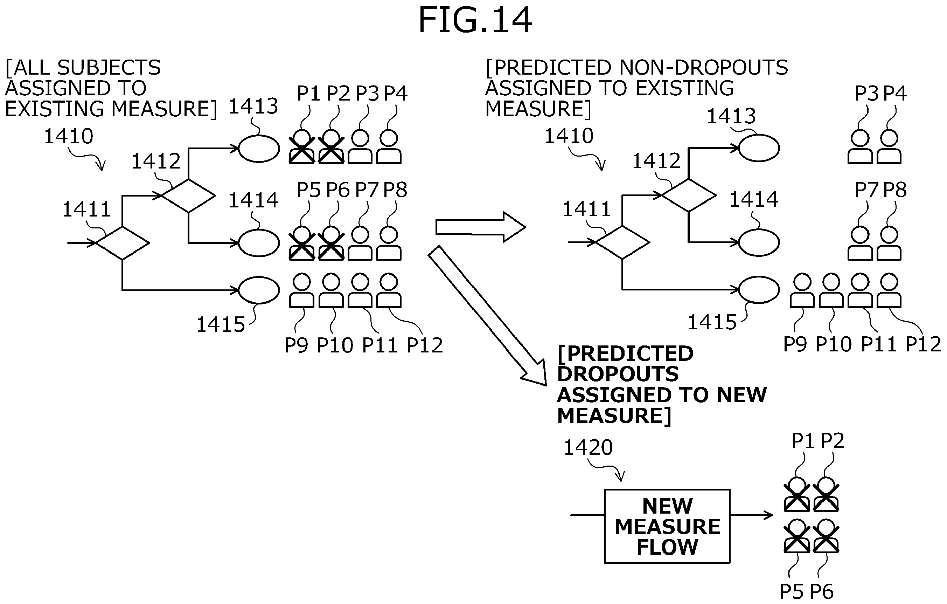

As a result, the flow controller device 201 may generate a new measure flow for a set of subjects (for example, set of predicted dropouts) that satisfy the first condition. An example of operation when a new measure flow is generated for a set of subjects that satisfy the first condition is described hereinafter with reference to Fig. 14.

Further, the measure flow may include nodes of multiple stages. In this case, based on a result of the subjects being assigned to nodes based on a range that includes the first node from the top in the workflow, the extracting unit 502 may extract from among the subjects, the first subjects that satisfy the first condition. Based on the distribution of the extracted first subjects in the range, the first determining unit 503 may determine the insertion point of the new conditional branch within the range.

Further, the second determining unit 504 may determine the second condition so that the first subjects are separated from the subjects that do not satisfy the first condition, at a node lower than the insertion point determined within the range. Subsequently, the inserting unit 506 may insert the determined second condition as a new conditional branch at the insertion point determined within the range. Further, the third determining unit 505 may determine a new node to be inserted at the branch destination of the inserted new conditional branch. Subsequently, the inserting unit 506 may insert the determined new node at the branch destination of the new conditional branch within the range.

Further, based on a result of the assignment of one or more subjects assigned, among the subjects, to a node directly above a node of each stage based on each range that includes a node of each stage below the first stage, the extracting unit 502 may extract from the one or more subjects, a second subject that satisfies the first condition. Subsequently, based on the distribution of the extracted second subjects, the first determining unit 503 may determine the insertion points of new conditional branches within the ranges.

Further, the second determining unit 504 may determine a fourth condition so that at a node that is lower than the determined insertion point for each range, the second subjects are separated from subjects that do not satisfy the first condition. Subsequently, the inserting unit 506 may insert the determined fourth condition, as a new conditional branch, at the determined insertion point in each range. Further, the third determining unit 505 may determine a new node that is to be inserted at the branch destination of the new conditional branch inserted in each range. Subsequently, the inserting unit 506 may insert the determined new node at the branch destination of the new conditional branch in each range.

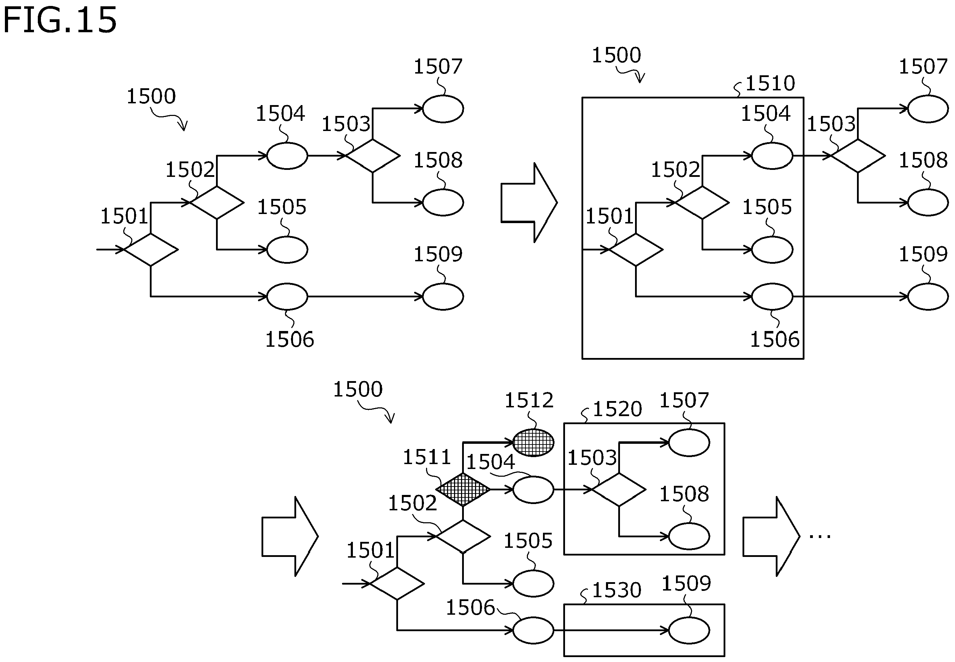

An example of operation when the measure flow includes nodes of multiple stages is described hereinafter with reference to Fig. 15.

Further, when the measure flow includes nodes of multiple stages, the flow controller device 201, for example, may set the first condition as "All dropout probabilities from the first intervention to the last intervention are at least equal to the threshold α." Further, the flow controller device 201 may set the first condition as "The dropout probability of any one intervention from the first intervention to the last intervention is at least equal to the threshold α."

Further, the flow controller device 201 may reassign the subjects to nodes, based on the measure flow in which a new node has been inserted. In particular, for example, the flow controller device 201 refers to the characteristics amount table 220 and according to the various types of characteristics amounts of the subjects, assigns the subjects to nodes, based on the measure flow in which a new node has been inserted.

In this case, the flow controller device 201 may output the result of assigning the subjects to the nodes. However, reassignment to the nodes may be performed at another computer (for example, the client device 202) difference from the flow controller device 201, based on a measure flow in which a new node has been inserted and output from the flow controller device 201.

Next, an example of determining an insertion point of a new conditional branch is described with reference to Figs. 6A, 6B, 7A, and 7B. In the description hereinafter, the first condition is assumed to be "The dropout probability is at least equal to the threshold α" and a first subject that satisfies the first condition may be indicated as a "predicted dropout". Further, a subject that does not satisfy the first condition may be indicated as a "predicted non-dropout". Further, nodes included in a measure flow may be indicated as "intervention nodes". Intervention nodes are nodes that represent interventions for achieving an objective.

Fig. 6A is a diagram depicting one example of a distribution of predicted dropouts. Fig. 7A is a diagram depicting one example of determining an insertion point of a new conditional branch. In Fig. 6A, a measure flow 610 includes intervention nodes N11, N12, and N13 and conditional branches B11 and B12 connected by directed edges. Subjects P1, P2, P3, P4, P5, P6, P7, P8, P9, 10, P11, and P12 are the subjects of a measure.

Here it is assumed that, based on the various types of characteristics amounts of each of the subjects P1 to P12, the subjects P1 to P4 are assigned to the intervention node N11, the subjects P5 to P8 are assigned to the intervention node N12, and the subjects P9 to P12 are assigned to the intervention node N13. Further, a case is assumed in which, among the subjects P1 to P12, dropout of the subjects P1 to P4 is predicted and the subjects P1 to P4 are extracted as predicted dropouts.

First, the flow controller device 201 specifies an intervention node group X, based on the distribution of the predicted dropouts P1 to P4 in the measure flow 610. The intervention node group X is a set of intervention nodes to which predicted dropouts (first subjects) are assigned and intervention nodes that include predicted dropouts that are subjects guided to other intervention nodes.

For example, in a case in which the predicted dropouts concentrate at an intervention node, the flow controller device 201 specifies the intervention node alone as the intervention node group X. Further, in a case in which the predicted dropouts are distributed to multiple intervention nodes, the flow controller device 201 specifies the multiple intervention nodes as the intervention node group X.

In the example depicted in Fig. 6A, the predicted dropouts P1 to P4 concentrate at the intervention node N11. In this case, the flow controller device 201 specifies the intervention node N11 alone as the intervention node group X.

Next, the flow controller device 201 determines the insertion point of a new conditional branch in the measure flow 610 so that the specified intervention node group X is included. In particular, for example, the flow controller device 201 determines the insertion point of a new conditional branch to be a lowest point that includes the intervention node group X, in the measure flow 610. The insertion point of the new conditional branch, for example, is determined by specifying a directed edge.

In the example depicted in Fig. 7A, the intervention node group X is the intervention node N11 alone. In this case, the flow controller device 201 determines the insertion point of a new conditional branch to be a point A that is a lowest point that includes the intervention node group X (N11), in the measure flow 610. The point A is lower than the conditional branch B11 and corresponds to a directed edge connecting the conditional branch B11 and the intervention node N11.

Fig. 6B is a diagram depicting one example of distribution of predicted dropouts. Fig. 7B is a diagram depicting one example of determining an insertion point of a new conditional branch. In Fig. 6B, a measure flow 620 includes the intervention nodes N21, N22, and N23 and conditional branches B21 and B22 connected by directed edges. The subjects P1 to P12 are subjects of a measure.

Here, it is assumed that based on the various types of characteristics amounts of each of the subjects P1 to P12, the subjects P1 to P4 are assigned to the intervention node N21, the subjects P5 to P8 are assigned to the intervention node N22, and the subjects P9 to P12 are assigned to the intervention node N23. Further, a case is assumed in which, among the subjects P1 to P12, dropout of the subjects P1, P2, P5, and P6 is predicted and the subjects P1, P2, P5, and P6 are extracted as predicted dropouts.

First, the flow controller device 201 specifies the intervention node group X, based on the distribution of the predicted dropouts P1, P2, P5, and P6 in the measure flow 620. The flow controller device 201 specifies multiple intervention nodes as the intervention node group X when predicted dropouts are distributed among multiple intervention nodes.

In particular, for example, the flow controller device 201 arranges the intervention nodes in descending order of the number of predicted dropouts and adds intervention nodes that include a predicted dropout to the intervention node group X until predicted dropouts of a predetermined percentage are included and thereby, specifies the intervention node group X. The predetermined percentage is a percentage relative to the total number of predicted dropouts. The predetermined percentage may be arbitrarily set and, for example, is set to a value of about 90%.

The flow controller device 201 may adjust the coverage of the predicted dropouts, for example, by changing the predetermined percentage. For example, when the predetermined percentage is 100%, the intervention node group X is specified to include all the predicted dropouts. Further, when the predetermined percentage is 30%, the intervention node group X is specified to include 30% or more of all the predicted dropouts.

In the example depicted in Fig. 7B, the predicted dropouts P1, P2, P5, and P6 are distributed between the intervention nodes N21 and N22. In this case, the flow controller device 201 arranges the intervention nodes N21 and N22 in descending order of the number of predicted dropouts. When the numbers of predicted dropouts are equal, any one of the intervention nodes may be first in the order. Here, the number of predicted dropouts in both the intervention node N21 and the intervention node N22 is "2".

The flow controller device 201, for example, arranges the intervention nodes N21 and N22 in the order of "the intervention node N21⇒the intervention node N22". Subsequently, the flow controller device 201 adds to the intervention node group X, intervention nodes that include a predicted dropout, until predicted dropouts of the predetermined percentage are included and thereby, specified the intervention node group X.

Here, the predetermined percentage is assumed to be "90%". First, the flow controller device 201 adds the intervention node N21 to the intervention node group X. The percentage of predicted dropouts at this stage is "50% (=2/4×100)". Therefore, the flow controller device 201 further adds the intervention node N22 to the intervention node group X. The percentage of predicted dropouts at this stage is "100% (=4/4×100)" and exceeds the predetermined percentage. As a result, the intervention nodes N21 and N22 are specified as the intervention node group X.

Next, the flow controller device 201 determines an insertion point of a new conditional branch in the measure flow 620 so as to include the specified intervention node group X. In particular, for example, the flow controller device 201 determines the insertion point of a new conditional branch to be a lowest point that includes the intervention node group X, in the measure flow 620.

In the example depicted in Fig. 7B, the intervention node group X includes the intervention nodes N21 and N22. In this case, the flow controller device 201 determines the insertion point of a new conditional branch to be a point B that is a lowest point that includes the intervention node group X (N21, N22), in the measure flow 620. The point B is higher than the conditional branch B21 and corresponds to a directed edge connecting the conditional branch B21 and the conditional branch B22.

Next, an example of inserting a new conditional branch is described with reference to Figs. 8A and 8B. Here, in Fig. 8A, a case is described in which a new conditional branch is inserted at the point A (insertion point) depicted in Fig. 7A. In Fig. 8B, a case is described in which a new conditional branch is inserted at the point B (insertion point) depicted in Fig. 7B.

Fig. 8A is a diagram depicting one example of insertion of a new conditional branch. Fig. 8A, depicts the insertion point A in the measure flow 610. The flow controller device 201 inserts the new conditional branch B13 at the insertion point A in the measure flow 610. As a result, the flow controller device 201 guides the predicted dropouts P1 to P4 assigned to the intervention node N11 to a branch destination 801 of the new conditional branch B13.

Fig. 8B is a diagram depicting one example of insertion of a new conditional branch. Fig. 8B depicts the insertion point B in the measure flow 620. The flow controller device 201 inserts the new conditional branch B23 at the insertion point B in the measure flow 620. As a result, the flow controller device 201 guides the predicted dropouts P1 and P2 assigned to the intervention node N21 and the predicted dropouts P5 and P6 assigned to the intervention node N22 to a branch destination 802 of the new conditional branch B23.

Next, an example of determining the second condition for a new conditional branch is described with reference to Fig. 9. Here, an example of determining the second condition for the new conditional branch B23 inserted into the measure flow 620 depicted in Fig. 8B.

Fig. 9 is a diagram depicting one example of determining the second condition for a new conditional branch. In Fig. 9, characteristics amount information 900 shows various types of characteristics amounts for each of the subjects P1 to P8 assigned to the intervention node group X (N21, N22) of the measure flow 620. The subjects P1, P2, P5, and P6 are predicted dropouts. The subjects P3, P4, P7, and P8 are predicted non-dropouts. The characteristics amount information 900, for example, is identified from the characteristics amount table 220.

The flow controller device 201 refers to the characteristics amount information 900 and determines the second condition so that in the intervention node group X (the intervention nodes N21 and N22 that are lower than the insertion point B depicted in Fig. 7B), the predicted dropouts P1, P2, P5, and P6 and the predicted non-dropouts P3, P4, P7, and P8 are separated from each other.

The second condition is determined using a decision tree algorithm. Here, with respect to the characteristics amount 2, the predicted dropouts P1, P2, P5, and P6 and the predicted non-dropouts P3, P4, P7, and P8 are completely separated from each other by the condition "period without medical examination≥five months". Thus, the flow controller device 201 determines the second condition to be, for example, a condition 910 "IF "period without medical examination"≥five months, THEN proceed upward (predicted dropout group)". Here, "proceed upward (predicted dropout group)" corresponds to the branch destination in an instance in which the second condition is satisfied.

There may be cases in which no condition is found that completely separates the predicted dropouts P1, P2, P5, and P6 and the predicted non-dropouts P3, P4, P7, and P8. In such a case, the flow controller device 201, for example, may introduce a new characteristics amount that is not in the characteristics amount table 220 (the characteristics amount information 900). The new characteristics amount, for example, may be extracted from the attribute information, the health information histories, the diagnostic result histories, the lifestyle habit histories, the medical test result histories, etc. of each of the subjects P1 to P8 or may be added manually. The flow controller device 201 adds a new characteristics amount and thereby enables generation of a conditional branch of a new axis.

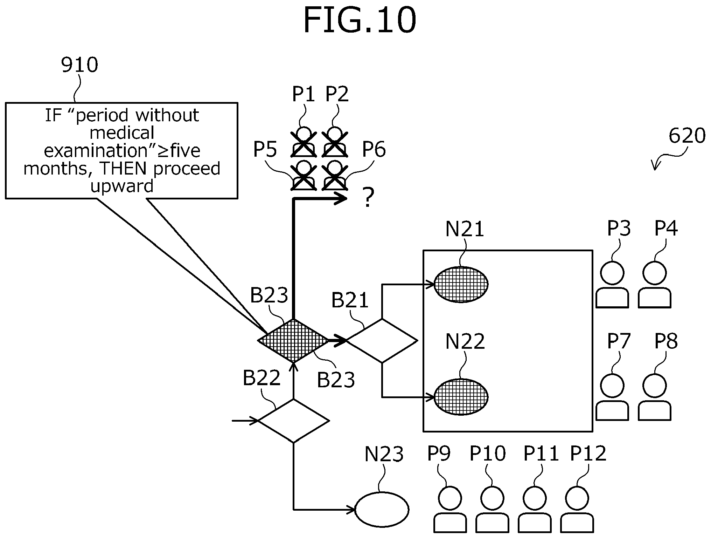

An example of guidance of predicted dropouts by a new conditional branch is described with reference to Fig. 10. Here, a case is described in which the new conditional branch B23 depicted in Fig. 8B is assumed as the condition 910 "IF "period without medical examination"≥five months, THEN proceed upward" depicted in Fig. 9.

Fig. 10 is a diagram depicting one example of guidance of the predicted dropouts. In Fig. 10, the new conditional branch B23 of the condition 910 "IF "period without medical examination"≥five months, THEN proceed upward" is inserted in the measure flow 620.

In this case, the subjects P3, P4, P7, and P8 do not satisfy the condition 910 "IF "period without medical examination"≥five months, THEN proceed upward". Therefore, the subjects P3, P4, P7, and P8 proceed to the conditional branch B21 and are each assigned to either of the intervention nodes N21 and N22 that remain the same as before insertion of the new conditional branch B23, thereby the subjects P3, P4, P7, and P8 become predicted non-dropouts.

On the other hand, the predicted dropouts P1, P2, P5, and P6 satisfy the condition 910 "IF "period without medical examination"≥five months, THEN proceed upward". Therefore, the predicted dropouts P1, P2, P5, and P6 are guided to the upper side (branch destination different from the conditional branch B21) of the new conditional branch B23 and are not assigned to the intervention nodes N21 or N22.

Next, an example of determining a new node (intervention node) to be inserted at the branch destination of the new conditional branch is described with reference to Figs. 11 and 12. Here, an example determining an intervention node that is to be inserted at the branch destination of the new conditional branch B23 (refer to Figs. 10 and 11) that has been inserted in the measure flow 620 is described.

Fig. 11 is a diagram depicting one example of determining a new node. In Fig. 11, predicted dropout results 1100 show predicted dropout results for interventions A, B, C, and D of the predicted dropouts P1, P2, P5, and P6. In Fig. 11, in the predicted dropout results 1100, "∘" indicates no dropout, that is, receipt of the intervention. In the predicted dropout results 1100, "×" indicates dropout, that is, no receipt (acceptance) of the intervention. Whether an intervention is received (dropout/no dropout) is predicted using an existing technology (for example, Prior art 2).

The interventions A to D are each one example of interventions that represent multiple types of nodes prepared in advance. The interventions A to D may be the same as the interventions that represent any of the intervention nodes included in the measure flow 620 or may be different from the interventions that represent the intervention nodes included in the measure flow 620. For example, the predicted dropout P1 is predicted to not receive the interventions A and D and to receive the interventions B and C.

The flow controller device 201, from among the interventions A to D, sets a new intervention node so that the predicted dropouts P1, P2, P5, and P6 (the first subjects) satisfy the third condition. Here, the third condition is assumed to be the condition "The dropout probability is less than the threshold β". "The dropout probability is less than the threshold β" is equivalent to no dropout from the intervention.

In this case, the flow controller device 201 identifies, among the interventions A to D, the intervention that has the lowest percentage of dropouts among the predicted dropouts P1, P2, P5, and P6. Further, the flow controller device 201 may identify, among the interventions A to D, an intervention that has a percentage of dropouts among the predicted dropouts P1, P2, P5, and P6, less than or equal to a threshold. Subsequently, the flow controller device 201 determines an intervention node that represents the identified intervention that is to be the intervention node that is to be inserted at the branch destination of the new conditional branch B23.

In the example depicted in Fig. 11, the intervention C is predicted to be received by all the predicted dropouts P1, P2, P5, and P6. In this case, the flow controller device 201 determines an intervention node N24 that represents the intervention C to be the intervention node that is to be inserted at the branch destination of the new conditional branch B23. Subsequently, the flow controller device 201 inserts the intervention node N24 that represents the intervention C, at the branch destination of the new conditional branch B23.

As a result, the flow controller device 201 may assign the intervention C (the intervention node N24) for the predicted dropouts P1, P2, P5, and P6 guided to the branch destination of the new conditional branch B23.

Fig. 12 is a diagram depicting one example of determining the new node. In Fig. 12, predicted dropout results 1200 show predicted dropout results for interventions E, F, G, and H of the predicted dropouts P1, P2, P5, and P6. In Fig. 12, in the predicted dropout results 1200, "∘" indicates no dropouts, that is, receipt of the intervention. In the predicted dropout results 1200, "×" indicates dropout, that is, no receipt (acceptance) of the intervention.

The interventions E to H are each one example of interventions represented by multiple types of nodes prepared in advance. For example, the predicted dropout P1 is predicted to not receive (accept) the interventions E, G, or H and is predicted to receive (accept) the intervention F.

The flow controller device 201, from among the interventions E to H, sets a new intervention node so that the predicted dropouts P1, P2, P5, and P6 (the first subject) satisfy the third condition. Here, the third condition is assumed to be "The dropout probability is less than the threshold β". "The dropout probability is less than the threshold β" is equivalent to no dropout from the intervention.

In this case, the flow controller device 201 identifies, among the interventions E to H, the intervention that has the lowest percentage of dropouts among the predicted dropouts P1, P2, P5, and P6. Further, the flow controller device 201 may identify, among the interventions E to H, an intervention that has a percentage of dropouts among the predicted dropouts P1, P2, P5, and P6, less than or equal to the threshold. Subsequently, the flow controller device 201 determines an intervention node that represents the identified intervention that is to be the intervention node that is to be inserted at the branch destination of the new conditional branch B23.

In the example depicted in Fig. 12, even when any one of the interventions is selected from among the interventions E to H, the percentage of dropouts does not become 0%. However, when the intervention F is assigned to the predicted dropouts P1 and P2 and the intervention H is assigned to the predicted dropouts P5 and P6, the percentage of dropouts becomes 0%.

In this case, the flow controller device 201, for example, refers to the various types of characteristics amounts of each of the predicted dropouts P1, P2, P5, and P6 and determines a condition that separates the predicted dropouts P1 and P2 and the predicted dropouts P5 and P6 from each other. Subsequently, the flow controller device 201 inserts the determined condition, as the new conditional branch B24, at the branch destination (branch destination on the upper side) of the conditional branch B23.

Next, the flow controller device 201 determines an intervention node N25 that represents the intervention F, as the new node that is to be inserted at the branch destination of the new conditional branch B24 to which the predicted dropouts P1 and P2 are guided. Subsequently, the flow controller device 201 inserts the intervention node N25 at the branch destination of the new conditional branch B24 to which the predicted dropouts P1 and P2 are guided.

Further, the flow controller device 201 determines an intervention node N26 that represents the intervention H to be the new node that is to be inserted at the branch destination of the new conditional branch B24 to which the predicted dropouts P5 and P6 are guided. Subsequently, the flow controller device 201 inserts the intervention node N26 at the branch destination of the new conditional branch B24 to which the predicted dropouts P5 and P6 are guided.

As a result, the flow controller device 201 may assign the intervention F (the intervention node N25) to the predicted dropouts P1 and P2 that are guided to the branch destination (upper side) of the new conditional branch B24. Further, the flow controller device 201 may assign the intervention H (the intervention node N26) to the predicted dropouts P5 and P6 that are guided to the branch destination (lower side) of the new conditional branch B24.

Next, an example of operation when a new measure flow is generated with a single node as a starting point is described with reference to Figs. 13A and 13B. Here, a case is described in which the threshold γ is assumed to be "γ=20%" and a new measure flow is generated by adding a conditional branch and an intervention node until the percentage (dropout probability) of the predicted dropouts (subjects satisfying the first condition) among the subjects is 20% or less.

Figs. 13A and 13B are diagrams depicting a first example of operation when a new measure flow is generated. In Fig. 13A, a subject group 1320 (12 persons) is one example of multiple subjects that are subjects of the measure. Further, a measure flow 1300 is an unfinished measure flow that includes only a single intervention node 1301.

In this case, the subject group 1320 is assigned to the intervention node 1301. Here, the subject group 1320 assigned to the intervention node 1301 is assumed to include a predicted dropout group 1321 of six people. The dropout probability at this time is 50% (=6/12×100), which is greater than the threshold γ.

Therefore, the flow controller device 201 inserts, in the measure flow 1300, a conditional branch 1302 for separating the predicted dropout group 1321 from a predicted non-dropout group 1322. As a result, the predicted dropout group 1321 is guided to the branch destination (upper side) of the conditional branch 1302.

In Fig. 13B, the flow controller device 201 inserts a new intervention node 1303 at the branch destination (upper side) of the conditional branch 1302 in the measure flow 1300. The intervention node 1303 is determined so that the percentage of dropouts of the predicted dropout group 1321 decreases.

A subject group (predicted dropout group) 1321 is assigned to the intervention node 1303. Here, the subject group 1321 assigned to the intervention node 1303 is assumed to include a predicted dropout group 1323 of three persons. The dropout probability at this time is 25% (=3/12×100), which is greater than the threshold γ.

Thus, the flow controller device 201 inserts, into the measure flow 1300, a conditional branch 1304 for separating the predicted dropout group 1323 from a predicted non-dropout group 1324. As a result, the predicted dropout group 1323 is guided to the branch destination (upper side) of the conditional branch 1304.

The flow controller device 201 inserts a new intervention node 1305 at the branch destination (upper side) of the conditional branch 1304 in the measure flow 1300. The intervention node 1305 is determined so that the percentage of the dropouts of the predicted dropout group 1323 decreases.

The subject group (predicted dropout group) 1323 is assigned to the intervention node 1305. Here, the subject group 1323 assigned to the intervention node 1305 is assumed to be free of predicted dropouts. The dropout probability at this time is 0% (=0/12×100), which is less than or equal to the threshold γ. Thus, the flow controller device 201 ends the generation of the measure flow 1300.

As a result, the flow controller device 201, with the single intervention node 1301 as a starting point, may generate the measure flow 1300 by adding conditional branches and intervention nodes.

Next, an example of operation when a new measure flow is generated for a set of subjects that satisfy the first condition is described with reference to Fig. 14. Here, a subject that satisfies the first condition is assumed to be a "predicted dropout".

Fig. 14 is a diagram depicting a second example of operation when a measure flow is generated. In Fig. 14, a measure flow 1410 is an existing measure flow. The measure flow 1410, for example, may be a measure flow created by a planner or may be a measure flow that has been updated by the flow controller device 201.

The measure flow 1410 includes conditional branches 1411 and 1412 and intervention nodes 1413, 1414, and 1415. Here, a case in which the subjects P1 to P4 are assigned to the intervention node 1413 as a result of assigning the subjects P1 to P12 to intervention nodes based on the measure flow 1410 is assumed.

Further, the subjects P5 to P8 are assumed to be assigned to the intervention node 1414 and the subjects P9 to P12 are assumed to assigned to the intervention node 1415. Further, it is assumed that the subjects P1 and P2 assigned to the intervention node 1413 are predicted to dropout and the subjects P5 and P6 assigned to the intervention node 1414 are predicted to dropout.

In this case, of the subjects P1 to P12, the predicted non-dropouts P3, P4, and P7 to P12 are assumed to be subjects of a measure (existing measure) based on the measure flow 1410. On the other hand, for the predicted dropouts P1, P2, P5, and P6, the flow controller device 201 generates a new measure flow 1420. Specific contents of the processing for generating the new measure flow 1420, for example, are similar to the contents of the processing described in Figs. 13A and 13B.

Thus, the flow controller device 201 may generate the new measure flow 1420 for only the predicted dropouts P1, P2, P5, P6 predicted to not respond and, thus, not receive an intervention of the existing measure. For example, the flow controller device 201 may enhance the efficiency of generating a measure flow to achieve an objective, as compared to a case in which a single measure flow that covers all the subjects P1 to P12 is created.

Next, an example of operation in a case in which the measure flow includes nodes of multiple stages is described with reference to Fig. 15.

Fig. 15 is a diagram depicting one example of operation in a case in which the measure flow includes nodes of multiple stages. In Fig. 15, a measure flow 1500 is one example of a measure flow that includes intervention nodes of multiple stages. The measure flow 1500 includes conditional branches 1501, 1502, and 1503 and the intervention nodes 1504, 1505, 1506, 1507, 1508, and 1509. Of the intervention nodes 1504 to 1509, the intervention nodes 1504 to 1506 are intervention nodes of a first stage. Further, the intervention nodes 1507 to 1509 are intervention nodes of a second stage.

In such a case, first, the flow controller device 201, for example, applies the present flow control method to a range (partial measure) that includes the first intervention node. Thereafter, the flow controller device 201 applies the present flow control method to each region that includes the next intervention node. In an instance in which there are three or more stages of intervention nodes, the flow controller device 201 repeats the processes for each stage.

In the example depicted in Fig. 15, the flow controller device 201 applies the present flow control method to a range 1510 that includes the intervention nodes 1504 to 1506 of the first stage from the top of the measure flow 1500. In particular, for example, the flow controller device 201 extracts predicted dropouts from the subjects, based on a result of assigning the subjects to the nodes on a basis of the range 1510.

The flow controller device 201 determines the insertion point of the new conditional branch within the range 1510, based on the distribution of the extracted predicted dropouts in the range 1510. The flow controller device 201 determines a condition so that the predicted dropouts are separated from the predicted non-dropouts at an intervention node that is lower than the determined insertion point of the range 1510 and inserts the determined condition, as a new conditional branch, at the determined insertion point in the range 1510. Here, a new conditional branch 1511 is inserted.

The flow controller device 201 determines a new node that is to be inserted at the branch destination of the inserted new conditional branch 1511 and inserts the determined new node at the branch destination of the new conditional branch 1511 in the range 1510. Here, a new intervention node 1512 is inserted at the branch destination of the new conditional branch 1511.

Next, the flow controller device 201 applies the present flow control method to ranges 1520 and 1530 that include the intervention nodes 1507 to 1509 of the second stage. Here, an example of processing by the flow controller device 201 is described taking the range 1520 as an example.

In particular, for example, the flow controller device 201, based on a result of assigning, among the subjects, one or more subjects assigned to the intervention node 1504 directly above the intervention nodes 1507 and 1508 on a basis of the range 1520, extracts predicted dropouts from the one or more subjects. Subsequently, the flow controller device 201 determines the insertion point of a new conditional branch within the range 1520, based on the distribution of the extracted predicted dropouts in the range 1520.

Further, the flow controller device 201 determines a condition so that the predicted dropouts are separated from the predicted non-dropouts at an intervention node that is below the determined insertion point of the range 1520. Subsequently, the flow controller device 201 inserts the determined condition as a new conditional branch at the determined insertion point in the range 1520. Further, the flow controller device 201 determines a new node that is to be inserted at the branch destination of the new conditional branch inserted in the range 1520 and inserts the determined new node at the branch destination of the new conditional branch in the range 1520.

As a result, the flow controller device 201 may apply the present flow control method to a measure flow that includes intervention nodes of multiple stages and aid decision making for a measure for achieving an objective.

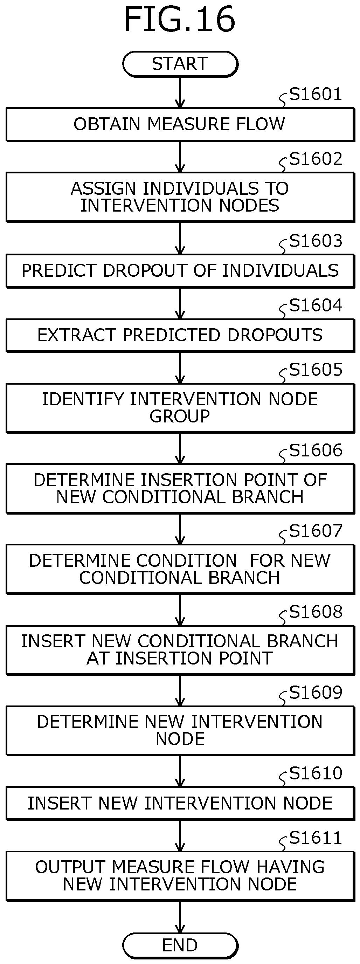

Next, an example of a procedure of a flow control process of the flow controller device 201 is described with reference to Fig. 16. Here, the subjects of the measure are assumed to be "multiple individuals" and nodes included in the measure flow are assumed to be "intervention nodes". Further, the first condition is assumed to be "The dropout probability is at least equal to the threshold α", the first subjects satisfying the first condition are assumed to be "predicted dropouts", and the subjects not satisfying the first condition are assumed to be "predicted non-dropouts".

Fig. 16 is a flowchart depicting one example of the procedure of the flow control process of the flow controller device 201. In the flowchart depicted in Fig. 16, first, the flow controller device 201 obtains a measure flow that includes intervention nodes connected to conditional branches by directed edges (step S1601).

Next, the flow controller device 201 refers to the characteristics amount table 220 and according to the various types of characteristics amounts of each of the multiple individuals, assigns each of the individuals to the intervention nodes (step S1602). Subsequently, based on the node assignment result, the flow controller device 201 uses the various types of characteristics amounts of the multiple individuals and predicts dropout of individuals (step S1603).

Next, the flow controller device 201 extracts the predicted dropouts from the multiple individuals, based on the results of the prediction of dropout of the individuals (step S1604). Subsequently, based on the distribution of the extracted predicted dropouts in the obtained measure flow, the flow controller device 201 identifies an intervention node group of subjects to be guided (step S1605).

The intervention node group is a set of intervention nodes that includes the predicted dropouts that are subjects to be guided to nodes different from the intervention node group X described above.

Next, the flow controller device 201 determines an insertion point of a new conditional branch in the measure flow so as to include the identified intervention node group (step S1606). Subsequently, the flow controller device 201 refers to the characteristics amount table 220 and determines a condition (the second condition) for a new conditional branch (step S1607). In particular, for example, based on the various types of characteristics amounts of each of the individuals assigned to the intervention node group (intervention nodes that are lower than the determined insertion point), the flow controller device 201 determines a condition so that the predicted dropouts and predicted non-dropouts in the intervention node group are separated.

Next, the flow controller device 201 inserts the determined condition as a new conditional branch at the determined insertion point (step S1608). Subsequently, the flow controller device 201 determines a new intervention node that is to be inserted at the branch destination of the new conditional branch (step S1609). In particular, for example, based on the various types of characteristics amounts of the predicted dropouts, the flow controller device 201 determines, from among the various types of intervention nodes that are prepared in advance, a new intervention node so that the predicted dropouts satisfy the third condition.

Next, the flow controller device 201 inserts the new intervention node at the branch destination of the new conditional branch (step S1610). Subsequently, the flow controller device 201 outputs the measure flow having the new intervention node (step S1611) and ends the series of processes according to the present flowchart.

Thus, the flow controller device 201 updates an existing measure flow and thereby may automatically generate a measure flow so that an occurrence of dropout (a case in which an individual does not receive (accept) the assigned intervention) is suppressed.

After step S1610, the flow controller device 201 may refer to the characteristics amount table 220 based on the measure flow into which the new node has been inserted and reassign the multiple individuals to the nodes. In this case, the flow controller device 201, at step S1611, may output a result of the reassignment of the multiple individuals to the nodes associated with the measure flow into which the new node has been inserted.

As described above, according to the flow controller device 201 of the embodiment, first subjects that satisfy the first condition may be extracted from among multiple subjects, based on the results of assigning the multiple subjects to nodes based on a workflow that includes nodes connected to conditional branches by directed edges. The workflow, for example, is a measure flow that represents a measure for achieving an objective. The nodes, for example, are intervention nodes that represent interventions for achieving the objective. The first condition, for example, is a condition that the predicted probability that a subject will not receive (accept) the intervention represented by the node to which the subject is assigned is at least equal to the threshold α.

Thus, the flow controller device 201 may extract subjects for whom the effect of an assigned intervention in an existing measure may be low such as, for example, dropouts predicted to not respond and thus, not receive an intervention.

Further, according to the flow controller device 201, the insertion point of a new conditional branch in the workflow may be determined based on the distribution of the extracted first subjects in the workflow. Further, according to the flow controller device 201, the second condition that, at a node that is lower than the determined insertion point, separates the first subjects from subjects that do not satisfy the first condition may be inserted at the insertion point as a new conditional branch, and a new node may be inserted at the branch destination of the new conditional branch. Further, according to the flow controller device 201, a workflow into which a new node has been inserted may be output.

Thus, the flow controller device 201 may create a new branching point (conditional branch) and update the flow structure so that predicted dropouts are guided to a new node. As a result, the flow controller device 201 may facilitate generation of a workflow that suppresses the occurrence of cases in which a subject does not receive (accept) an intervention and may enhance the efficiency of generation a workflow that represents a measure for achieving an objective.

Further, according to the flow controller device 201, the insertion point of a new conditional branch in a workflow may be determined to be the lowest point that encompasses the node assigned to the first subjects.

As a result, the flow controller device 201 suppresses the number of subjects that are separated from one another by a conditional branch and thus, for example, may facilitate determining a suitable condition for separating predicted dropouts (the first subjects) from predicted non-dropouts (subjects not satisfying the first condition).

Further, according to the flow controller device 201, the storage unit 510 that stores therein various types of characteristics amounts for each subject is referred to and based on the various types of characteristics amounts for each of the subjects assigned to a node that is lower than the determined insertion point, the second condition may be determined. Further, according to the flow controller device 201, the determined second condition may be inserted, as a new conditional branch, at the determined insertion point.

As a result, the flow controller device 201, with consideration of characteristics of each of the subjects, may determine, for example, a condition for separating predicted dropouts and predicted non-dropouts.

Further, according to the flow controller device 201, the storage unit 510 may be referred to and based on the various types of characteristics amounts of each of the first subjects, a new node may be determined from among the multiple types of nodes so that the first subjects satisfy the third condition. Further, according to the flow controller device 201, the determined new node may be inserted at the branch destination of the new conditional branch. The third condition, for example, is a condition that the predicted probability that the intervention will not be received (accepted) is less than the threshold β.

As a result, the flow controller device 201, for example, may assign an intervention having a low probability of a case (dropout) occurring in which a subjects does not receive (accept) the intervention, an intervention having a high effect, etc. to predicted dropouts.

Further, according to the flow controller device 201, when a workflow includes only a single node and a new node is to be inserted, the process of extracting the first subject until the percentage of subjects satisfying the first condition among the multiple subjects becomes equal to the threshold γ or less, the process of determining an insertion point, the process of determining the second condition, the process of inserting a new conditional branch, and the process of inserting a new node may be repeatedly executed.

As a result, the flow controller device 201 may generate a new measure flow with a single node as a starting point, by adding conditional branches and nodes.

Further, according to the flow controller device 201, when a workflow includes nodes of multiple stages, first subjects that satisfy the first condition may be extracted from among the subjects based on a result of assigning the subjects to nodes on a basis of a range that includes the first node from the top in the workflow. Further, according to the flow controller device 201, the insertion point of a new conditional branch in the range may be determine based on the distribution of the extracted first subjects in the range. Further, according to the flow controller device 201, the second condition that may separate the first subjects from subjects that do not satisfy the first condition at a node that is lower than the determined insertion point of the range may be inserted at the insertion point as a new conditional branch and a new node may be inserted at the branch destination of the new conditional branch within the range.

As a result, for a workflow that includes nodes of multiple stages, the flow controller device 201 creates a new branching point (conditional branch) with respect to a range that includes a node of the first stage and updates the flow structure so that predicted dropouts are guided to the new node.

Further, according to the flow controller device 201, second subjects that satisfy the first condition may be extracted from among one or more subjects, based on a result of assigning to the nodes, the one or more subjects being assigned, among the multiple subjects, to a node directly above a node of each stage on a basis of each range that includes a node of each stage that is lower than the first stage. Further, according to the flow controller device 201, based on the distribution of the extracted second subjects in each range, the insertion point of a new conditional branch in each range may be determined, a fourth condition that, at a node lower than the determined insertion point of each range, separates the second subjects from subjects that do not satisfy the first condition may be inserted at the insertion point as a new conditional branch, and a new node may be inserted at the branch destination of the new conditional branch in each range.

As a result, for a workflow that includes nodes of multiple stages, the flow controller device 201 may create a new branching point (conditional branch) with respect to a range that includes each first node of the second and subsequent stages and may update the flow structure so that predicted dropouts are guided to the new node.

Thus, according to the flow controller device 201, the efficiency of generating a workflow that represents a measure may be enhanced and decision making for the measure to achieve an objective may be aided. For example, in a municipality, the flow controller device 201 may aid the work of planning a measure that assigns various types of services (interventions) based on the age, health information, diagnostic results, lifestyle habits, etc. of residents, with an objective of maintaining the health of residents. Further, the flow controller device 201 may aid the work of planning a measure that assigns various types of requests (interventions) based on the number of employees of a company or factory, scope of business, history of power consumption, history of used equipment, etc.

The flow control method described in the present embodiment may be implemented by executing a prepared program on a computer such as a personal computer and a workstation. The program is stored on a non-transitory, computer-readable recording medium such as a hard disk, a flexible disk, a CD-ROM, a DVD, a USB memory, etc., read out from the computer-readable medium, and executed by the computer. The program may be distributed through a network such as the Internet.

Further, the flow controller device 201 described in the present embodiment may be realized by an application specific integrated circuit (ASIC) such as a standard cell or a structured ASIC, or a programmable logic device (PLD) such as a field-programmable gate array (FPGA).

According to one aspect of the present invention, an effect is achieved in that the efficiency of workflow generation may be enhanced.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. A flow control method executed by a computer, the flow control method comprising:
extracting, from a plurality of subjects, one or more first subjects each satisfying a first condition, the one or more first subjects being extracted based on a result of assignment of the plurality of subjects to a node based on a workflow that includes the node connected to a conditional branch by a directed edge;
determining an insertion point of a new conditional branch in the workflow, based on distribution of the one or more extracted first subjects in the workflow;
inserting a second condition, as the new conditional branch, at the insertion point, the second condition separating, at a lower node that is lower than the determined insertion point, the one or more first subjects from a subject not satisfying the first condition among the plurality of subjects; and
inserting a new node at a branch destination of the new conditional branch.

2. The flow control method according to claim 1, wherein
determining the insertion point includes determining the insertion point to be a lowest point that encompasses the node to which the one or more first subjects are assigned in the workflow.

3. The flow control method according to claim 1 or 2, further comprising
referring to a storage unit storing therein various types of characteristics amounts for each of the plurality of subjects and determining the second condition, based on the various types of characteristics amounts for each subject assigned to the lower node lower than the determined insertion point, wherein
inserting the new conditional branch includes inserting the determined second condition, as the new conditional branch, at the insertion point.

4. The flow control method according to any one of claims 1 to 3, the method further comprising
referring to a storage unit storing therein various types of characteristics amounts for each of the plurality of subjects and based on the various types of characteristics amounts of the one or more first subjects, determining the new node from among a plurality of types of nodes so that the one or more first subjects satisfy a third condition, wherein
inserting the new node includes inserting the determined new node at the branch destination.

5. The flow control method according to any one of claims 1 to 4, wherein
the workflow represents a measure for achieving an objective, and
the node represents an intervention for achieving the objective.

6. The flow control method according to claim 3, wherein
the workflow includes the node that is a single node connected to the conditional branch by the directed edge, and
the extracting the one or more first subjects, the determining the insertion point, the determining the second condition, the inserting the new conditional branch, and the inserting the new node are performed with respect to the workflow into which the new node is inserted, until among the plurality of subjects, a percentage thereof satisfying the first condition is not more than a threshold.

7. The flow control method according to any one of claims 1 to 6, wherein
when the workflow includes a plurality of nodes of a plurality of stages, the extracting the one or more first subjects that satisfy the first condition includes extracting the one or more first subjects from the plurality of subjects based on a result of assignment of the plurality of subjects to the plurality of nodes on a basis of a range that includes a first-stage node of a first stage from a highest point in the workflow,
determining the insertion point of the new conditional branch includes determining the insertion point of the new conditional branch in the range based on the distribution of the extracted one or more first subjects in the range,
inserting the second condition includes inserting, at the insertion point as the new conditional branch, the second condition that, at the lower node that is lower than the determined insertion point of the range, separates the one or more first subjects from subjects not satisfying the first condition, and
inserting the new node includes inserting the new node at the branch destination of the new conditional branch in the range.

8. The flow control method according to claim 7, further comprising:
extracting one or more second subjects each satisfying the first condition, the one or more second subjects being extracted from one or more subjects, based on a result of node assignment of the one or more subjects that, of the plurality of subjects, are assigned to a node directly above a node of each stage on a basis of each range that includes the node of each stage below the first stage;
determining the insertion point of the new conditional branch in the each range based on distribution of the extracted one or more second subjects in the each range;
inserting a fourth condition, as the new conditional branch, at the insertion point, the fourth condition, at the lower node that is lower than the determined insertion point of the each range, separating the one or more second subjects from the subjects not satisfying the first condition; and
inserting the new node at the branch destination of the new conditional branch in the each range.

9. The flow control method according to claim 5, wherein
the first condition is a predicted probability of the intervention represented by an assigned node not being received is at least equal to a threshold.

10. The flow control method according to claim 4, wherein
the workflow represents a measure for achieving an objective,
the node represents an intervention for achieving the objective, and
the third condition is a predicted probability of the intervention represented by an assigned node not being received is less than a threshold.

11. The flow control method according to any one of claims 1 to 10, further comprising outputting the workflow into which the new node is inserted.

12. A flow control program that causes a computer to execute a process comprising:
extracting, from a plurality of subjects, one or more first subjects each satisfying a first condition, the one or more first subjects being extracted based on a result of assignment of the plurality of subjects to a node based on a workflow that includes the node connected to a conditional branch by a directed edge;
determining an insertion point of a new conditional branch in the workflow, based on distribution of the one or more extracted first subjects in the workflow;
inserting a second condition, as the new conditional branch, at the insertion point, the second condition separating, at a lower node that is lower than the determined insertion point, the one or more first subjects from a subject not satisfying the first condition among the plurality of subjects; and
inserting a new node at a branch destination of the new conditional branch.

13. An information processing device, comprising:
a memory; and
a processor coupled to the memory, the processor configured to:
extract, from a plurality of subjects, one or more first subjects each satisfying a first condition, the one or more first subjects being extracted based on a result of assignment of the plurality of subjects to a node based on a workflow that includes the node connected to a conditional branch by a directed edge;
determine an insertion point of a new conditional branch in the workflow, based on distribution of the one or more extracted first subjects in the workflow;
insert a second condition, as the new conditional branch, at the insertion point, the second condition separating, at a lower node that is lower than the determined insertion point, the one or more first subjects from a subject not satisfying the first condition among the plurality of subjects; and
insert a new node at a branch destination of the new conditional branch.
